(19) Europäisches Patentamt
European Patent Office
Office européen des brevets

(11) **EP 2 762 832 B1**

(12) **EUROPÄISCHE PATENTSCHRIFT**

(45) Veröffentlichungstag und Bekanntmachung des Hinweises auf die Patenterteilung:
**13.06.2018   Patentblatt 2018/24**

(51) Int Cl.:
*G01C 15/00* *(2006.01)*   *G01B 11/02* *(2006.01)*
*G01C 3/06* *(2006.01)*

(21) Anmeldenummer: **13153315.0**

(22) Anmeldetag: **30.01.2013**

(54) **Optische Einzelpunktmessung**

Optical single-point measurement

Mesure optique des points individuels

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.08.2014   Patentblatt 2014/32**

(73) Patentinhaber:
• **Hexagon Technology Center GmbH
9435 Heerbrugg (CH)**
• **Hexagon Metrology GmbH
35578 Wetzlar (DE)**

(72) Erfinder:
• **Jensen, Thomas
9400 Rorschach (CH)**

• **Siercks, Knut
9402 Mörschwil (CH)**
• **Champ, Peter
Pinner HA5 3HG (GB)**
• **Geil, Matthias
35745 Herborn (DE)**

(74) Vertreter: **Kaminski Harmann
Patentanwälte AG
Landstrasse 124
9490 Vaduz (LI)**

(56) Entgegenhaltungen:
**DE-A1- 19 736 588      DE-A1- 19 836 812
FR-A1- 2 654 218      US-A1- 2006 182 314
US-A1- 2006 201 006**

EP 2 762 832 B1

**Beschreibung**

Die Erfindung betrifft ein Distanzmessverfahren für einen Punkt nach dem Oberbegriff des Anspruchs 1, ein Messgerät zur Distanzbestimmung nach Anspruch 11 und ein Computerprogrammprodukt nach Anspruch 15.

Die Distanzbestimmung zu Messpunkten bildet die Grundlage für eine Vielzahl von Messaufgaben und für entsprechende Messgeräte. Insbesondere die optische Distanzmessung wird beispielsweise für Messgeräte im Vermessungswesen (Geodäsie) oder bei der industriellen Werkstücküberprüfung bzw. -vermessung eingesetzt. Dabei können beispielsweise Koordinaten von Punkten im Gelände oder an einem zu kontrollierenden Werkstück bestimmt werden. Vorteile dieser Methodiken liegen insbesondere in einem breiten Anwendungsgebiet aufgrund der grossen Messreichweite und in den vergleichsweise grossen Messgenauigkeiten, die z.B. durch interferometrische Distanzmessung bereitgestellt werden können.

Zum Vermessen eines Zielpunktes sind seit der Antike zahlreiche geodätische Vermessungsgeräte bekannt. Als räumliche Standarddaten werden dabei Richtung bzw. Winkel und meist auch Entfernung von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter, Totalstation und auch Laserscanner, die in den Varianten terrestrisch und airborne ausgeführt sind, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktion, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte weisen in der Regel eine kompakte und integrierte Bauweise auf, wobei meist koaxiale Distanzmesselemente sowie Rechen-, Steuer- und Speichereinheiten in einem Gerät vorhanden sind. Abhängig von der Anwendung sind Totalstationen zudem mit einer Motorisierung der Anziel- bzw. Visiereinrichtung sowie - im Fall der Verwendung von Retroreflektoren (etwa eines Rundum-Prismas) als Ziel-Objekte - Mittel zur automatischen Zielsuche und -verfolgung ausgerüstet. Als Mensch-Maschine-Schnittstelle kann die Totalstation eine elektronische Anzeige-Steuereinheit - im Allgemeinen eine Mikroprozessor-Recheneinheit mit elektronischen Datenspeichermitteln - mit Display und Eingabemitteln, z.B. einer Tastatur, aufweisen. Der Anzeige-Steuereinheit werden die elektrosensorisch erfassten Messdaten zugeführt, sodass die Position des Zielpunkts durch die Anzeige-Steuereinheit ermittelbar, optisch anzeigbar und speicherbar ist. Durch den Einsatz der optischen Distanzmessung können hierbei präzise Entfernungen über grosse Distanzen zu verhältnismässig weit entfernten Messpunkt bestimmt werden.

Ausserdem besteht in vielen technischen bzw. industriellen Anwendungsbereichen das Bedürfnis, Oberflächen von Objekten und damit auch die Objekte selbst mit hoher Genauigkeit zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für diese Anwendungen werden üblicherweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Zudem ist inzwischen der Einsatz von optischen Messsensoren bei Koordinatenmessmaschinen üblich. Die hierfür verwendeten optischen Sensoren beruhen auf einer Einstrahlung von z.B. Laserlicht auf eine Objektoberfläche für interferometrische Messungen (EP 2 037 214). Auch Verfahren beruhend auf Weisslicht-Interferometrie (DE 10 2005 061 464) und chromatisch-konfokale Verfahren (FR 273 8343) sind bekannt.

Optische Sensoren bzw. Messverfahren für eine Koordinatenmessmaschine sind mit einer Reihe von Vorteilen verbunden: Die Messung erfolgt kontaktlos, und der optische Sensor kann schneller als ein taktiler Sensor über eine Objektoberfläche geführt werden, mit einer geringeren physikalischen Abmessung der "Messspitze", wodurch eine höhere laterale Auflösung der Messung ermöglicht wird.

Den genannten optischen Messverfahren gemein ist jedoch der Nachteil einer nur bedingt genauen Distanzbestimmung bei Auftreten von ungünstigen Umwelteinflüssen, wie z.B. Vibrationen am Messgerät, oder an schwer zu vermessenden Oberflächen, welche z.B. ein starkes Streuen der Messstrahlung verursachen oder eine bezüglich der gewählten Strahlungseigenschaften ungünstige Rauhigkeit aufweisen. Hierbei können so genannte "Speckle-Effekte", die wesentlich zur Messunsicherheit beitragen können, auftreten und dadurch einzelne aufgenommene Messwerte zu einem definierten Punkt starken Schwankungen unterliegen. DE 198 36 812 A1 offenbart ein Handlasergerät zur Distanzmessung, welches mittels einer Schwenkbewegung und den daraus resultierenden Mehrfachmessungen einen Mittelwert bildet. Im Speziellen leidet die geometrische Formerfassung mit optischen Sensoren (z.B. mit Koordinatenmessmaschinen) bei Einzelpunktmessungen an Oberflächen mit einer Rauhigkeit im Bereich der optischen Wellenlänge der Messstrahlung an Messunsicherheiten aufgrund der Kohärenz der emittierten oder detektierten Strahlung. Bei schmalbandigen Lichtquellen wie z.B. Lasern ist die Kohärenz der Strahlung durch die Linienbreite vorgegeben und zeigt sich bei interferometrischen Messungen bei der Detektion in so genannten "Speckles", was zu einer Modulation der erfassten Amplitude und Phase führt.

Gewisse Ansätze, wie z.B. die Berücksichtung einer Amplitudengewichtung bei der Phasenbestimmung erlauben zwar eine Reduzierung des Speckle-Einflusses, aber nicht dessen vollständige Eliminierung (vgl. B. Wiesner et al., "Improved white-light interferometry on rough surfaces by statistically independent speckle patterns", Appl. Opt. 51, 751-757 (2012) und EP 2 037 214 A1). Die verbleibende Unsicherheit liegt bei solchen Verfahren im Bereich der Rauhigkeit des Messobjekts (siehe Pavel Pavlicek and Jan Soubusta, "Theoretical Measurement Uncertainty of White-Light Interferometry on Rough Surfaces," Appl. Opt. 42, 1809-1813 (2003)).

Auch nicht phasenauswertende Verfahren wie die chromatisch-konfokale Messtechnik zeigen Unsicherheiten aufgrund von Speckles, welche in diesem Fall nicht durch die Kohärenz der Quelle sondern durch die spektrale Filterung im Rahmen des Messverfahrens entstehen. Hierdurch steht nur ein enger Bereich der verwendeten Messstrahlung effektiv zur Verfügung, was einer Reduzierung der Linienbreite der Quelle entspricht und damit einer Erhöhung der Kohärenz gleichsetzbar ist (D. Fleischle, W. Lyda, F. Mauch, und W. Osten, "Untersuchung zum Zusammenhang von spektraler Abtastung und erreichbarer Messunsicherheit bei der chromatisch-konfokalen Mikroskopie an rauen Objekten", DGAO Proceedings 2010).

Hinsichtlich der durch Speckles verursachten Messunsicherheit erfolgt bei der spektral-aufgelösten Weisslichtinterferometrie - auch Fourier-domain Optical-Coherence-Tomography (FD-OCT) genannt -eine spektrale Zerlegung der Messstrahlung in einem Spektrometer mit entsprechender Speckle-Empfindlichkeit (D.C. Adler, T.H. Ko, and J.G. Fujimoto, "Speckle reduction in optical coherence tomography images by use of a spatially adaptive wavelet filter", Opt. Lett. 29, 2878-2880 (2004)).

Die Genauigkeit der scannenden Weisslichtinterferometrie mit variabler, durchstimmbarer Referenzarmlänge - auch time-domain OCT genannt - ist ebenfalls speckleabhängig. Die Emissionsbreite kann dabei als ein Bündel von einzelnen, schmalbandigen Wellenpaketen betrachtet werden, die bei äquidistanten Armlängen zur Interferenz gebracht werden. Die Rauheit des Messobjekts führt dann zu einer Amplituden- und Phasenmodulation des Interferogramms (A. Harasaki, J.C. Wyant, "Fringe modulation skewing effect in white-light vertical scanning interferometry", Appl. Opt. 39, 2101 (2000)).

Diesen Verfahren gemeinsam ist die statistische Fluktuation des Distanzwertes bei der Messpunktaufnahme auf rauhen Oberflächen. Bei Einzelmessungen z.B. auf einer leicht aufgerauhten Oberfläche einer Kalibrationskugel können dadurch Form- und Massfehler von einigen Mikrometern auftreten.

Es ist daher Aufgabe der vorliegenden Erfindung ein verbessertes Verfahren zur Distanzmessung bzw. ein verbessertes Messgerät bereitzustellen, wodurch eine gemessene Distanz zu einem Punkt präziser und zuverlässiger, insbesondere mit einer geringeren Messunsicherheit, bestimmbar ist.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Distanzmessverfahren für einen zu vermessenden Punkt auf einem Objekt, mit einem Ausführen eines Messvorgangs mit einem Emittieren von Messstrahlung, wobei bei einer Ausrichtung auf den zu vermessenden Punkt einer optischen Messachse der Messstrahlung ein optischer Messpunktbereich durch deren Strahlquerschnitt auf dem Objekt, insbesondere durch einen einem maximal Zehnfachen, insbesondere maximal Achtfachen, insbesondere maximal Sechs- bzw. Vierfachen, der Standardabweichung $\sigma$ eines Gaussschen Stahlprofils der Messstrahlung entsprechenden Querschnitt, definiert wird, und einem Empfangen von am Objekt reflektierter Messstrahlung. Ausserdem erfolgt ein Bestimmen der Distanz zu dem Punkt auf dem Objekt aus der empfangenen Messstrahlung des Messvorgangs.

Erfindungsgemäss erfolgt im Rahmen des Messvorgangs ein zumindest einmaliges Verändern einer Messrichtung als Emissionsrichtung der Messstrahlung mit jeweiligem Emittieren und Empfangen der Messstrahlung, wobei das Verändern der Messrichtung jeweils so erfolgt, dass jeweilige durch den Strahlquerschnitt auf dem Objekt definierte Flächenschwerpunkte innerhalb des Messpunktbereichs liegen.

Der Messpunktbereich ist generell definiert anhand des Strahlprofils der Messstrahlung bzw. durch den dadurch gegebenen Strahlquerschnitt. In Abhängigkeit des jeweiligen Strahlprofils der verwendeten Messstrahlung kann der Strahldurchmesser der Messstrahlung jedoch bisweilen nur verhältnismässig unscharf definiert werden.

Bei einer typischen Verwendung einer Messstrahlung mit einem gaussförmigen Strahlprofil ist ein Strahldurchmesser in Zusammenhang mit vorliegender Erfindung beispielsweise zu verstehen als derjenige Durchmesser, der dem Vierfachen der Gaußschen Standardabweichung σ entspricht. Dies ist gleichbedeutend mit einem Strahldurchmesser, bei welchem ein Intensitätsabfall auf etwa 13,5% (1/e$^2$) des Intensitätsmaximums relativ zum Strahlzentrum vorliegt. Jedoch ist der mit Messstrahlung bestrahlte Bereich auf dem Objekt (aufgrund des Gaussprofils) deutlich grösser (beispielsweise entsprechend dem Sechs- bzw. Achtfachen der Standardabweichung σ), wobei die Intensität mit zunehmendem Abstand zum Strahlzentrum stark abnimmt. Bei einer Entfernungsmessung wird reflektiertes Licht auch aus diesen wenig intensiv beleuchteten Randbereichen erfasst.

Der optische Messpunktbereich, innerhalb dem der jeweilige Flächenschwerpunkt für eine jeweilige Messung angeordnet wird, wird in diesem Zusammenhang - erfindungsgemäss - insbesondere durch ein Vielfaches n der Standardabweichung σ des Gaußschen Strahlprofils auf dem Objekt definiert, wobei n maximal gleich zehn, insbesondere maximal gleich acht, ist.

Bei einer Festlegung des Messpunktbereichs entsprechend dem Zehnfachen der Standardabweichung σ des Gaußschen Strahlprofils der Messstrahlung können im Rahmen der Einzelmessungen, also der jeweiligen Messungen mit veränderter Messrichtung, (Entfernungs-) Informationen bezüglich zumindest dem äusseren Randbereich (Bereich ausserhalb des zentralen Strahlquerschnitts, also ausserhalb des Vierfachen der Gaußschen Standardabweichung σ) des Strahlquerschnitts gewonnen werden.

Bei einer Definition des Messpunktbereichs entsprechend maximal dem Achtfachen der Standardabweichung σ des Gaußschen Strahlprofils der Messstrahlung werden im Rahmen der Einzelmessungen (Entfernungs-) Informationen aus zumindest dem Randbereich des durch das Vierfache der Standardabweichung definierten zentralen Strahldurchmessers (Strahldurchmesser bei Ausrichtung der Messachse auf den zu vermessenden Punkt) gewonnen. Hierbei ist mindestens eine Überlappung des Strahlquerschnitts der Messstrahlung bei jeder Messung mit zumindest dem Rand des bei Ausrichtung der Messachse auf den zu vermessenden Punkt festgelegten zentralen Strahlquerschnitts gegeben. Mit jeder Messung wird somit Information korrespondierend zu zumindest einem Teil der Messfläche, die einer Einzelanmessung des zu vermessenden Punkts entspricht, erfasst, wobei durch eine Akkumulation und Auswertung solcher Informationen eine statistische Unsicherheit für eine einzelne Entfernungsmessung zu dem Punkt reduziert werden kann.

Erfindungsgemäss ist der Messpunktbereich insbesondere definiert durch den dem maximal Sechsfachen bzw. Vierfachen der Standardabweichung σ des Gaussschen Stahlprofils der Messstrahlung entsprechenden Querschnitt. Bei derartigen Begrenzungen des Messpunktbereichs ist für jeweilige Einzelmessungen jeweils ein grösserer Überlappungsbereich (aus zentralem Strahldurchmesser um den zu vermessenden Punkt und Strahlquerschnitt bei jeweiliger Einzelmessung) gegeben.

Gemäss einer speziellen Ausführungsform der Erfindung ist der optische Messpunktbereich definiert durch einen Bereich dessen Bereichsgrenze gemäss einem Abstand zur Strahlmitte verläuft, bei welchem die Messstrahlung eine Intensität von einem (1/e$^2$)-fachen des Intensitätsmaximums aufweist.

Eine Variation des Strahlquerschnitts auf dem Objekt in Abhängigkeit des Abstands zum Objekt bei vorliegender fokussiert oder divergenter Strahlung wird im Zusammenhang mit obigen Betrachtungen insbesondere berücksichtigt.

Erfindungsgemäss werden somit mindestens zwei Einzelmessungen zu einem zu vermessenden Punkt so ausgeführt, dass ein für jede Messung erzeugter Flächenschwerpunkt eines durch die Messstrahlung jeweils erzeugten Messpunkts innerhalb des Messpunktbereichs liegt. Die durch die optische Messachse definierte Messrichtung wird dabei insbesondere zur Ausrichtung der Messstrahlung auf den zu vermessenden Punkt bzw. den Messpunktbereich eingestellt. Als Messstrahlung kann typischerweise divergente, kollimierte oder fokussierte Laserstrahlung eingesetzt werden.

Hierbei kann insbesondere zunächst direkt der zu vermessende Punkt angezielt werden, d.h. die optische Messachse ist auf den Punkt ausgerichtet, und ein eine Entfernungsinformation zu dem Punkt repräsentierendes Messsignal erzeugt und erfasst werden. In diesem Zusammenhang kann der Messpunktbereich bei dieser Anzielung z.B. mittels eines Erfassens eines Bildes des Punktes und des durch die Strahlung beleuchteten Bereichs um den Punkt bestimmt werden. Hierbei können zudem bestimmte Objektformen, wie z.B. gekrümmte Objektoberflächen, und damit entstehenden Verzerrungen des Messpunktbereichs berücksichtigt werden.

Alternativ oder zusätzlich kann der Messpunktbereich jedoch auch aus einer bei einem direkten Anzielen des zu vermessenden Punkts bestimmten Entfernung zu dem Punkt und einer bekannten Divergenz bzw. Fokussierung der Messstrahlung abgeleitet werden.

Bei einem bekannten Messpunktbereich (z.B. bei bekannter grober Distanz zum Objekt und/oder geringer Divergenz oder Fokussierung der Messstrahlung) muss somit der zu vermessenden Punkt im Rahmen der Erfindung nicht direkt angemessen werden. Vielmehr kann die Entfernung (bzw. Position) zu dem Punkt aus den mindestens zwei Messungen innerhalb des Messpunktbereichs abgeleitet werden.

Bezüglich der Bestimmung der Distanz aus der im Rahmen des Messvorgang empfangenen Messstrahlung kann das Ableiten der Distanz mittels einer Mittelung der für die Messausrichtungen bestimmten Entfernungen oder durch ein Mitteln über eine Kumulation von bei jeder Ausrichtung erzeugten Messsignalen erfolgen. Für das Ableiten der Distanz zu dem zu vermessenden Punkt mittels Verändern der Messrichtung (wodurch mindestens zwei Einzelmessungen ausgeführt werden) wird somit insbesondere ein geeignetes Mittelungsverfahren über die Messungen für jede Ausrichtung der Messstrahlung eingesetzt.

Gemäss einer speziellen Ausführungsform der Erfindung können die im Rahmen des Messvorgangs durch den Strahlquerschnitt auf dem Objekt definierten Flächenschwerpunkte in Form einer abzutastenden Messstrecke, insbesondere in Kreisform oder als zwei sich kreuzende Linien, oder in einem zufälligen Muster angeordnet werden. Durch eine jeweils geeignete Anordnung der Flächenschwerpunke bzw. durch eine entsprechende geeignete Einstellung der jeweiligen Messrichtungen kann so beispielsweise eine optimale Verteilung von Messpunkten, die dem Messpunktbereich des zu vermessende Punkts zugeordnet sind, und/oder eine effiziente, schnelle und genaue Entfernungs- bzw. Positionsbestimmung für den Punkt erzielt werden.

Eine weitere erfindungsgemässe Ausführungsform betrifft die Positionsbestimmung für den zu vermessenden Punkt. Dabei wird für jeden in Abhängigkeit der Ausrichtung der Messrichtung und durch den Strahlquerschnitt auf dem Objekt definierten Messpunkt zusätzlich die jeweilige Messrichtung bestimmt und eine Entfernungsinformation erzeugt. Zudem wird für jeden Messpunkt eine Position basierend auf der jeweiligen Messrichtung und der Entfernungsinformation bestimmt, insbesondere werden Koordinaten bestimmt, und für den zu vermessenden Punkt eine Punktposition mittels Mittelwertbilden basierend auf den Positionen der Messpunkte abgeleitet, insbesondere basierend auf den Punktkoordinaten.

Gemäss einer weiteren speziellen Ausführungsform der Erfindung wird im Rahmen des Empfangens von am Objekt reflektierter Messstrahlung eine Signalstärke für die am Objekt reflektierte Messstrahlung bestimmt, wobei dies insbesondere fortlaufend durchgeführt wird.

Insbesondere kann erfindungsgemäss für jede Ausrichtung der Messstrahlung, insbesondere für jedes Verändern der Messrichtung, die Signalstärke bestimmt werden und dabei anhand der jeweils empfangenen Messstrahlung erzeugte Messsignale bezüglich einer jeweiligen Entfernung basierend auf den bestimmten Signalstärken gewichtet werden und die Distanz zu dem zu vermessenden Punkt in Abhängigkeit der Messsignale und des Gewichtens bestimmt werden.

Durch eine so bereitgestellte Signalstärkenüberwachung kann die Genauigkeit der Distanzbestimmung für den zu vermessenden Punkt deutlich gesteigert werden bzw. können Distanzwerte für einzelne Messpunkte im Rahmen eines Messvorgangs hinsichtlich ihrer Plausibilität geprüft und basierend darauf berücksichtigt werden oder nicht berücksichtigt werden.

Im Speziellen kann das Gewichten erfindungsgemäss korrespondierend zur Signalstärke erfolgen, wobei den Messsignalen mit grösseren Signalstärken ein grössrer Gewichtsfaktor und den Messsignalen mit kleineren Signalstärken ein kleinerer Gewichtsfaktor zugeordnet wird.

Ausserdem kann gemäss einer weiteren Ausführungsform der Erfindung basierend auf der bestimmten Signalstärke für jede Ausrichtung der Messstrahlung ein positionsabhängiger Objektzustand abgeleitet werden, insbesondere wobei aus den positionsabhängigen Objektzuständen eine topografische Beschaffenheit des Objekts abgeleitet wird.

Im Besonderen kann gemäss der Erfindung das Gewichten basierend auf dem Objektzustand erfolgen und das Bestimmen der Distanz zu dem zu vermessenden Punkt in Abhängigkeit des objektzustandsabhängigen Gewichtens erfolgen.

Hiermit kann beispielsweise eine grobe topografische Beschaffenheit der Objektoberfläche, insbesondere hinsichtlich der Reflexion der Messstrahlung, abgeleitete werden und basierend darauf die jeweiligen Messwerte für die einzelnen Ausrichtungen der Messrichtung bewertet werden.

Eine weitere erfindungsgemässe Ausführungsform betrifft das Gewichten der Messungen im Rahmen des Messvorgangs basierend auf einer Positionierung jedes Messpunkts relativ zum zu vermessenden Punkt. In diesem Zusammenhang werden den jeweiligen Ausrichtungen der Messrichtung zugeordnete Einzelmessungen in Abhängigkeit einer jeweiligen Entfernung zwischen dem Flächenschwerpunkt des Messpunktbereichs und dem Flächenschwerpunkt der jeweiligen Einzelmessung gewichtet und das Bestimmen der Distanz zu dem zu vermessenden Punkt erfolgt in Abhängigkeit des entfernungsabhängigen Gewichtens für die Einzelmessungen. Hierzu können bestimmte Abstandsfunktionen hinterlegt sein und dadurch z.B. ein Übergewichten für Messpunkte nahe am Flächenschwerpunkt des Messpunktbereichs bzw. ein Untergewichten für Punkte im Randbereich des Messpunktbereichs erreicht werden.

Um bei dem Ableiten der Distanz zu dem zu vermessenden Punkt Messpunkte (gemäss den jeweiligen Ausrichtungen der Messrichtung), die Aufgrund einer schlechten Speckle-Situation eine niedrigere mit einem Detektor erfassbare Signalstärke verursachen, entsprechend zu berücksichtigen, kann erfindungsgemäss eine signalabhängige Gewichtung eingeführt werden. Die einzelnen Positionen der Messpunkte $p_i$ werden hierbei mit ihren Signalstärken $S_i$ multipliziert. Die Positionskoordinate der Einzelpunktantastung ist dann gleich dem gewichteten Mittelwert $\overline{p}$, normiert durch die Summe der Signalstärken $S_i$:

$$\overline{p} = \frac{\sum_i p_i \cdot S_i}{\sum_i S_i}, \qquad mit\ p_i = [x_i, y_i, z_i]$$

In der Nähe von Objektkanten, bei denen es zu einem hohen Signalabfall kommen kann, lässt sich, durch die Gewichtung mit der Signalstärke, der fehlerhafte Einfluss von Randwerten (zumindest teilweise über die Kante gemessen) erheblich reduzieren. Dadurch wird auch eine genaue und rauscharme Positionsbestimmung für die durch das Variieren der Messrichtung entstehenden Messpunkte in Bereichen von starken Höhenschwankungen des Objektes möglich. Insbesondere bei der Verwendung von fokussierter Messstrahlung können (ohne Gewichtung) für Teile der Einzelmessungen Distanzen gemessen werden, die ausserhalb des eigentlichen Messbereiches (definiert durch die Fokussierung der Strahlung) liegen und dadurch auch nur ein sehr schwaches Signal im Vergleich zu den Distanzen aus dem Fokusbereich generieren.

Dieses Vorgehen ist entsprechend auf nur die Distanzbestimmung (ohne Berücksichtigung der koordinativen Position) zu dem Punkt übertragbar.

Erfindungsgemäss kann das mindestens einmalige Verändern der Messrichtung automatisch bei jedem Bestimmen der Distanz zu einem zu vermessenden Punkt oder bei Vorliegen einer definierten Messbedingung durchgeführt werden. Ein Beutzereingriff bzw. ein zusätzlicher Messprozess muss dann nicht mehr ausgeführt werden. Jedoch kann das erfindungsgemässe Verfahren auch halb-automatisch ausgeführt werden, d.h. unter bestimmten Messbedingungen kann vom Benutzer ein Befehl zur Ausführung des erfindungsgemässen Messvorgangs gegeben werden.

Im Rahmen der vorliegenden Erfindung kann gemäss einer speziellen Ausführungsform das Distanzbestimmen interferometrisch erfolgen.

Ausserdem kann basierend auf dem erfindungsgemässen Messvorgang eine Flächennormale für den Messpunktbereich bestimmt werden, insbesondere wobei die Messrichtung abhängig von der Flächennormale eingestellt wird.

Die Erfindung betrifft ausserdem ein Messgerät zur Distanzbestimmung zu einem zu vermessenden Punkt auf einem Objekt mit einer Entfernungsmesseinheit mit einer Strahlquelle zur Erzeugung einer Messstrahlung und einem Detektor zum Empfang der an dem Objekt reflektierten Messstrahlung, mit Ausrichtemitteln zur Einstellung einer durch die Messstrahlung definierten Messrichtung, wobei bei einer Ausrichtung einer durch die Messstrahlung definierten optischen Messachse auf den zu vermessenden Punkt ein optischer Messpunktbereich durch den Stahlquerschnitt der Messstrahlung auf dem Objekt, insbesondere durch einen einem maximal Zehnfachen, insbesondere maximal Achtfachen, der Standardabweichung $\sigma$ eines Gaussschen Stahlprofils der Messstrahlung entsprechenden Querschnitt, definiert wird, mit Ausrichtungsbestimmungsmitteln zur Bestimmung der durch die Messstrahlung definierten Messrichtung und mit einer Steuerungs- und Verarbeitungseinheit mit einer Distanzbestimmungsfunktionalität, bei deren Ausführung die Distanz zum Punkt aus der empfangenen Messstrahlung bestimmt wird.

Erfindungsgemäss wird bei Ausführung der Distanzbestimmungsfunktionalität gesteuert durch die Steuerungs- und Verarbeitungseinheit ein Einstellen der Messrichtung zur Ausrichtung der Messstrahlung auf den zu vermessenden Punkt und ein Emittieren der Messstrahlung und Empfangen von am Objekt reflektierter Messstrahlung ausgeführt. Zudem erfolgt ein zumindest einmaliges Verändern der Messrichtung mit jeweiligem Emittieren und Empfangen der Messstrahlung, wobei das Verändern der Messrichtung jeweils so erfolgt, dass jeweilige durch den Strahlquerschnitt auf dem Objekt definierte Flächenschwerpunkte innerhalb des Messpunktbereichs liegen.

Gemäss einer speziellen Ausführungsform der Erfindung ist das Messgerät als geodätisches Instrument, insbesondere Theodolit Totalstation oder Laserscanner, ausgebildet. Das geodätische Instrument weist eine eine Stehachse definierende Basis und einen mit der Basis beweglich verbundenen und relativ zur Basis um die Stehachse drehbaren Aufbau, wobei der Aufbau eine Kippachse definiert, auf. Ausserdem ist eine, mit dem Aufbau beweglich verbundene, um die Kippachse relativ zum Aufbau schwenkbare, insbesondere rotierbare, und zur Aussendung der Messstrahlung vorgesehenen Anzieleinheit, insbesondere Fernrohr, vorgesehen. Dabei steht die Kippachse im Wesentlichen orthogonal zur Stehachse, die Anzieleinheit weist die Entfernungsmesseinheit auf, und es ist eine die Ausrichtungsbestimmungsmittel repräsentierende Winkelmessfunktionalität vorgesehen zur Erfassung eines durch eine relative Drehposition des Aufbaus zur Basis definierten Drehwinkels und eines durch eine relative Schwenkposition der Anzieleinheit zum Aufbau definierten Schwenkwinkels.

Gemäss einer weiteren speziellen Ausführungsform der Erfindung ist das Messgerät als Koordinatenmessmaschine ausgebildet mit einer Maschinenbasis, einem Messkopf mit einem, insbesondere abnehmbaren, optischen Messsensor, wobei der Messsensor die Entfernungsmesseinheit aufweist, insbesondere wobei der Messkopf als schwenkbarer Messkopf ausgebildet ist und zumindest teilweise die Ausrichtemittel repräsentiert, und einer Rahmenstruktur mit Strukturkomponenten zur Verbindung des Messkopfs mit der Maschinenbasis. Des Weiteren verfügt die Koordinatenmessmaschine über zumindest eine Antriebseinheit zur Bereitstellung einer Beweglichkeit einer ersten der Strukturkomponenten relativ zu einer zweiten der Strukturkomponenten oder relativ zur Maschinenbasis in zumindest einer Richtung, wobei die Antriebseinheit zumindest teilweise die Ausrichtemittel repräsentiert, und über zumindest eine Messeinheit zur Bestimmung einer relativen Position der ersten Strukturkomponente zur zweiten Strukturkomponente oder zur Maschinenbasis, wobei die Messeinheit zumindest teilweise die Ausrichtungsbestimmungsmittel repräsentiert.

Bezüglich der Ausrichtung der Messstrahlung wird gemäss einer speziellen Ausführungsform bei Ausführung der Distanzbestimmungsfunktionalität die Messrichtung relativ zum zu vermessenden Punkt verändert durch eine Änderung der Position und/oder Ausrichtung der Ausrichtemittel (z.B. Messkopf oder Anzieleinheit) und/oder des Objekts. Dies kann insbesondere durch ein Schwenken, Drehen und/oder Verschieben des Messkopfes und/oder des Objekts und/oder durch ein gesteuertes Verstellen eines vom Messsensor umfassten Mikroverstellers, insbesondere eines Piezo-Stellelements oder Scanner-Spiegels, erzielt werden. Hierbei kann z.B. mittels eines erzeugten Vibrierens bzw. Zitterns des Messkopfs bzw. des Mikroverstellers eine schnelle und vielfache Ablenkung der Messrichtung erfolgen und dadurch eine Vielzahl von Messungen mit unterschiedlichen Messrichtungen durchgeführt werden.

Insbesondere kann im Zusammenhang mit der Ausrichtung der Messstrahlung die Messrichtung relativ zum zu vermessenden Punkt derart verändert werden, dass die Messrichtung parallel, insbesondere koaxial, zu einer Flächennormalen für den Messpunktbereich orientiert ist. Diese Flächennormale kann insbesondere auf Basis des Messvorgangs im Rahmen der Distanzbestimmungsfunktionalität aus den Einzelmessungen oder der Gesamtheit der Messungen abgeleitet werden.

Erfindungsgemäss ist die Steuerungs- und Verarbeitungseinheit insbesondere derart ausgebildet, dass gesteuert durch die Steuerungs- und Verarbeitungseinheit ein erfindungsgemässes Verfahren ausführbar ist.

Die Erfindung betrifft ausserdem ein Computerprogrammprodukt, das auf einem maschinenlesbaren Träger gespeichert ist, zur Steuerung des Veränderns der Messrichtung und zur Ausführung des Ableitens der Distanz für den Punkt aus der empfangenen Messstrahlung eines erfindungsgemässen Verfahrens, insbesondere wenn das Computerprogrammprodukt auf einer Steuerungs- und Verarbeitungseinheit eines erfindungsgemässen Messgeräts ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig.1a-b    einen Ablauf für ein abtastendes Verfahren zur Bestimmung einer Entfernung zu einem Punkt gemäss jeweils einer Ausführungsform der vorliegenden Erfindung;

Fig.2a-b    jeweils eine Anordnung von Messpunkten zur Bestimmung einer Entfernung zu einem Einzelpunkt gemäss der Erfindung;

Fig.3a-c    ein erfindungsgemässes Abtasten eines Bereichs um einen zu vermessenden Einzelpunkt in der Nähe einer Kante mit einem fokussierten Messstrahl, eine dabei erfolgende Signalstärkenüberwachung und ein Ergebnis einer davon abhängigen Gewichtung der Messwerte;

Fig.4a-b    jeweils eine Verteilung von Distanzmesswerten im Rahmen einer direkten Einzelpunktmessung zu jedem Punkt und einer erfindungsgemässen abtastenden Vermessung;

Fig.5    eine Ausführungsform einer erfindungsgemässen Koordinatenmessmaschine; und

Fig.6    ein erfindungsgemässes geodätisches Vermessungsgerät.

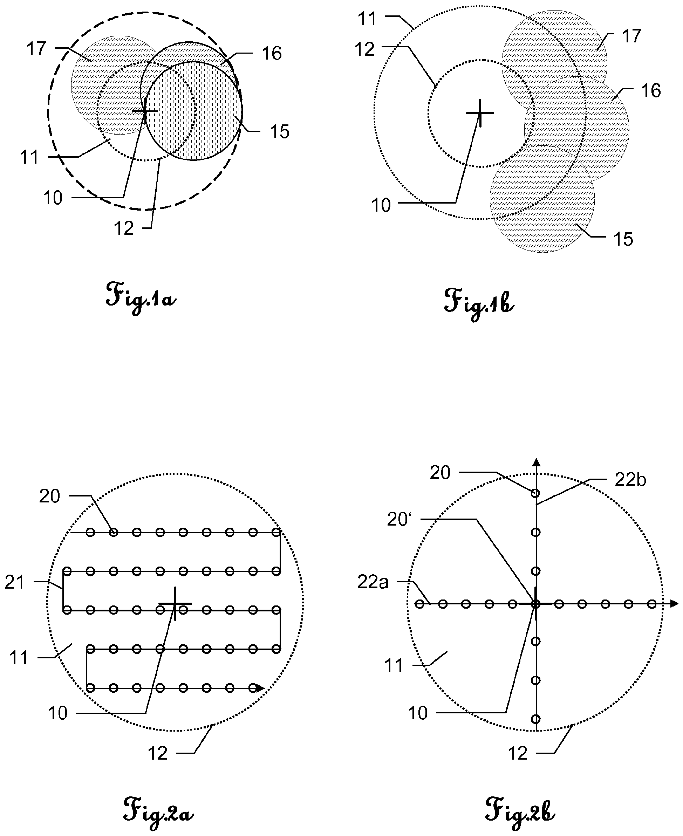

Figur 1a zeigt einen Ablauf für ein abtastendes Verfahren zur Bestimmung einer Entfernung zu einem Punkt 10 gemäss einer Ausführungsform der vorliegenden Erfindung. Ziel des hier angeführten erfindungsgemässen Prozesses ist die hochgenaue Ermittlung der Entfernung zu dem Punkt 10 bzw. die exakte Bestimmung einer Position (Koordinaten) für den Punkt 10.

Hierzu wird eine Mehrzahl von Einzelmessungen mit jeweils unterschiedlicher Ausrichtung der Messrichtung und jeweiligem so definierten Messpunkt 15,16,17 (hier beispielhaft drei gezeigt) ausgeführt, wobei für jeden Messpunkt 15,16,17 zumindest eine Entfernung, insbesondere zusätzliche eine Messrichtung korrespondierend zur Ausrichtung der Messstrahlung, bestimmt wird. Diese Einzelmessungen erfolgen ferner mit jeweils unterschiedlichen Ausrichtungen der Messstrahlung, sodass ein bei jeder Messung entstehender Messpunkt 15,16,17 jeweils versetzt zu einem vorangehenden ist, d.h. eine durch die optische Punktgrösse aktuell erzeugte Messpunktfläche (bei Auftreffen der Messstrahlung auf ein Objekt) überschneidet sich zumindest teilweise mit einer Messpunktfläche einer der vorherigen Messung.

Erfindungsgemäss werden die Messpunkte 15,16,17 der Einzelmessungen derart angeordnet - im Rahmen der jeweiligen Veränderung der Messrichtung -, dass deren jeweiliger Flächenschwerpunkt (der hier jeweils dem Mittelpunkt des jeweiligen runden Messpunkts 15,16,17 entspricht) innerhalb der Punktfläche 11 (Messpunktbereich) liegt, wobei die Punktfläche 11 der Fläche eines bei Ausrichtung der durch die Messstrahlung definierten optischen Messachse auf den Punkt 10 erzeugten optischen Messpunkts 12 entspricht.

Der Abstand zwischen dem Punkt 10, dessen Entfernung bestimmt werden soll, und einem Flächenschwerpunkt eines Messpunkts 15,16,17 der Einzelmessungen ist hier somit maximal gleich dem Radius des Messpunkts 12 um den Punkt 10.

Eine effektiv maximal abtastbare Messfläche - betrachtet über die Gesamtheit der Einzelmessungen - ist demnach ein Vierfaches der Punktfläche 11, die bei einer Bestimmung einer Entfernung mittels eines alleinigen Anzielens und Vermessens des Punktes 10 abgetastet wird.

Basierend auf einem solchen Abtasten (sog. "Mikroscan") im Bereich der optischen Spotgrösse 12 um den Punkt 10 wird die Entfernung zu dem Punkt 10 aus den Einzelmessungen (Entfernungsbestimmung für jeden Messpunkt) abgeleitet, insbesondere aus den Entfernungen für die Messpunkte 15,16,17 z.B. durch Mittelwertbildung. Die bei dem "Mikroscan" erzeugten Daten bilden dabei die statistische Unsicherheit für die Entfernungsbestimmung ab, wobei diese Unsicherheit durch die Mittelwertbildung für die Ausgabe einer einzigen Entfernungsinformation für den Punkt 10 wiederum reduziert wird.

Neben der Bestimmung der Entfernung für den Punkt 10 wird gemäss einer weiteren Ausführungsform der Erfindung die Position des Punktes 10 auf analoge Weise abgeleitet. Hierzu wird für jeden Messpunkt 15,16,17 eine Messpunktposition unter Berücksichtigung der jeweils vorliegenden Messrichtung der Messstrahlung bestimmt und basierend auf den Messpunktpositionen eine Einzelpunktposition für den Punkt 11 abgeleitet. Im Speziellen werden hierbei jeweilige Koordinaten für jeweilige Punkte bestimmt.

Figur 1b zeigt eine weitere Ausführung für die Durchführung eines erfindungsgemässen Verfahrens. Die Anordnung der Messpunkt 15,16,17 ist hier analog zur Anordnung der Punkt 15,16,17 gemäss Figur 1a vorgenommen, wobei jedoch der Messpunktbereich 11 dem zweifachen des Radius des Messpunkt 12 entspricht, so dass bei jeder Einzelmessung zumindest der Rand oder aber zusätzlich auch ein Teil der Fläche des Messpunkts 12 miterfasst wird und somit eine Überlappung sichergestellt ist. Die Gesamtfläche, die dadurch abgetastet werden kann, ist entsprechend grösser verglichen mit der Messfläche gemäss Figur 1a.

Das Abtasten kann beispielsweise in der Form einer Kreisbahn oder entlang zweier (z.B. orthogonal) kreuzender Linien ablaufen. Auch ist es denkbar, dass Rotationsachsen eines Messgeräts, wie z.B. ein Drehtisch, bei der Abtastbewegung berücksichtigt werden.

Die Figuren 2a-b zeigen jeweils eine Anordnung von Flächenschwerpunkten 20 für jeweilige Ausrichtungen der Messstrahlung zur Bestimmung einer Entfernung zu einem Einzelpunkt 10 gemäss der Erfindung. Ein jeweiliger Messpunkt und dessen Flächenschwerpunkt 20 wird für jede Einzelmessung durch das Auftreffen der Messstrahlung auf dem Objekt durch die optische Punktgrösse und einer korrespondierenden Punktfläche definiert. In den Figuren 2a-b sind jeweils die Flächenschwerpunkte 20 für die Punktflächen der erzeugten Messpunkte gezeigt.

Figur 2a zeigt eine mäanderförmige Anordnung (symbolisiert durch den Pfeil 21) der Flächenschwerpunkte 20 innerhalb einer dem Einzelpunkt 10 zugeordneten Einzelpunktfläche 11 (Messpunktbereich). Die Einzelpunktfläche 11 ist definiert durch die Grösse eines bei einer Ausrichtung der Messstrahlung auf den Einzelpunkt 10 entstehenden optischen Messpunkts 12 (im Wesentlichen entsprechend dem Strahlprofil der Messstrahlung am Auftreffbereich am Objekt).

Zu jedem Messpunkt der Einzelmessungen bzw. für jeden korrespondierenden Flächenschwerpunkt wird eine Entfernung zum Auftreffpunkt bestimmt. Diese Entfernung kann beispielsweise mittels Laufzeitmessung, nach dem Phasenmessprinzip und/oder interferometrisch bestimmt werden. Die Entfernung für den Einzelpunkt 10 wird in Folge aus den Einzelmessungen abgeleitet, insbesondere wobei ein Mittelwert über die Einzelentfernungen zu den Flächenschwerpunkten 20 berechnet wird.

Gemäss einer speziellen Ausführung der Erfindung werden für jeden Flächenschwerpunkt 20 Flächenschwerpunktkoordinaten bestimmt, wobei zusätzlich die Messrichtung bei der Koordinatenbestimmung herangezogen wird. Für den Einzelpunkt 10 werden ferner ebenfalls Einzelpunktkoordinaten aus den Flächenschwerpunktkoordinaten abgeleitet, sodass nicht nur eine sehr präzise Entfernungsinformation für den Einzelpunkt 10 vorliegt, sondern zudem eine exakte Position (repräsentiert durch die Koordinaten) für den Punkt 10 bereitgestellt wird.

Mittels einer solchen mäanderförmigen Anordnung 21 kann der Bereich innerhalb der Einzelpunktfläche 11 in einer effizienten Weise schnell - insbesondere in einem Zug ohne Unterbrechung einer Messfolge - abgetastet werden, wobei die Einzelpunktfläche 11 gut (und mehrmals) durch die Summe der einzelnen Messpunkte abgedeckt wird und dadurch eine reduzierte Messunsicherheit durch eine Mittelung über einen grossen Messbereich innerhalb der Einzelpunktfläche 11 bereitstellbar ist.

Figur 2b zeigt eine alternative Anordnung der Flächenschwerpunkte 20,20' derart, dass diese entlang zweier sich kreuzender Linien 22a,b liegen und der Schnittpunkt der Linien 22a,b und ein Flächenschwerpunkt 20' einer Einzelmessung auf dem Einzelpunkt 10 liegt. Die Einzelmessung mit dem Flächenschwerpunkt 20' entspricht somit einem Messen korrespondierend zum Einzelpunkt 10 mit einem Messpunkt, der in Position und Grösse dem optischen Messpunkt 12 für den Einzelpunkt 10 entspricht.

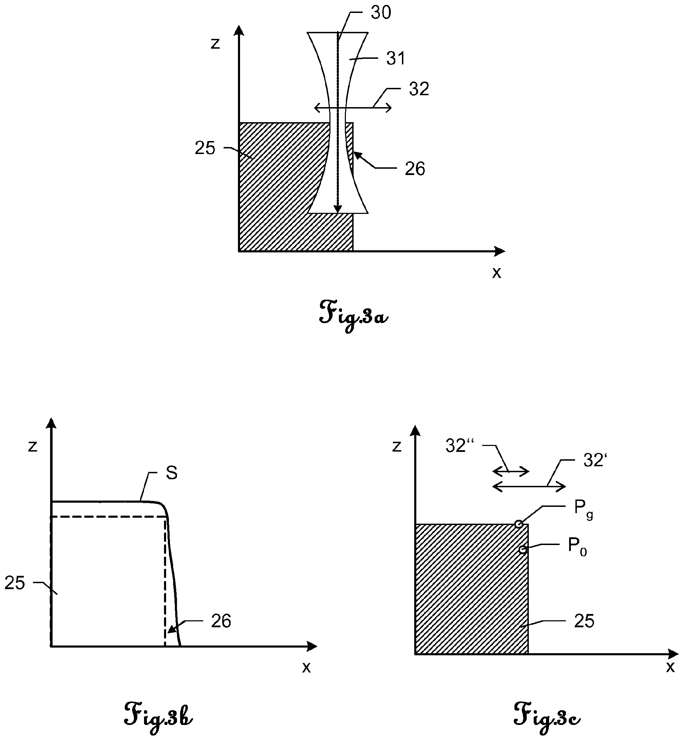

Figur 3a zeigt ein erfindungsgemässes Abtasten 32 eines Bereichs um einen zu vermessenden Punkt in der Nähe einer Kante 26 eines Objekts 25 mit einem fokussierten Messstrahl 30. Der Punkt, dessen Entfernung bzw. Position bestimmt werden soll, liegt auf der Oberfläche des Objekts 25. Dargestellt ist schematisch ein Strahlquerschnitt 31 entlang der Strahlenachse, wobei eine Oberflächenmessung am Objekt 25 im Wesentlichen an der Fokusposition der Strahlenachse (d.h. an der Strahltaille) ausgeführt wird. Mit dem Abtasten - also mit dem Ausführen von Einzelmessungen mit jeweils einem Messpunkt bei unterschiedlichen Ausrichtungen bzw. bei unterschiedlichen x-Positionen des Messstrahls 30 - des Objekts 25 entlang der x-Achse wird zu jeweiligen x-Positionen jeweils ein Messwert für die z-Position (= eine Entfernung zum Objekt 25 an der Stelle x) am Objekt 25 ermittelt.

Aufgrund der Fokussierung des Messstrahls 30 fällt eine mittels eines Detektors zusätzlich messbare Signalstärke S der am Objekt 25 reflektierten und rückgestreuten Strahlung bei Erreichen und Überschreiten der Kante 26 mit der Messstrahlung 31 schnell stark ab. Ein Teil der Messstrahlung 31 trifft dann nicht mehr auf das Objekt 25, sondern geht am Objekt 25 vorbei und wird nicht - oder nur zu wesentlich geringeren Teilen - auf den Detektor rückgestreut und dort erfasst.

Ein Verlauf der während des Abtastens gemäss Figur 3a gemessenen Signalstärke S, insbesondere das Abfallen der Signalstärke S an der Kante 26, ist in Figur 3b dargestellt. Auf der x-Achse ist dabei die Position der Strahlachse des Messstrahls 30 und auf der z-Achse die jeweils für die x-Position gemessene Signalstärke S aufgetragen. Durch ein derartiges fortlaufendes Bestimmen der Signalstärke S kann einem jeweiligen gemessenen Entfernungswert für einen Messpunkt eine Gewichtung, die auf der gemessenen Signalstärke S basiert, zugeordnet werden und der jeweilige Entfernungswert bei der Ableitung der Distanz für den Punkt entsprechend der Gewichtung in die Berechnung einbezogen werden.

Ein Ergebnis einer erfindungsgemässen Gewichtung von bestimmten Einzelpositionen $P_i$ der erzeugten Messpunkte und ein Bestimmen der Position für den jeweiligen Messpunkt basierend auf der Gewichtung ist beispielhaft in Figur 3c dargestellt. Der Pfeil 32' repräsentiert hierbei einen effektiven Messbereich innerhalb dem die Einzelmessungen (mit den jeweiligen Messpunkten) für die Ableitung der Einzelpunktposition des Einzelpunkts durchgeführt werden.

Nähert sich nun ein fokussierter Messstrahl 30 gemäss Figur 3a der Kante 26 des Objekt 25, wird für diejenigen Messpunkte, die bedingt durch die Fokussierung des Messstrahls 30 nur teilweise noch auf dem Objekt 25 liegen, eine Entfernung für die x-Position des Messstrahls 30 bestimmt, durch die eine Punktposition für den Messpunkt innerhalb des Objekts 25 ermittelt würde. Eine solche Position für den Messpunkt ist beispielhaft gezeigt durch die so berechnete Position $P_0$ für diesen Punkt. Durch das Gewichten des jeweiligen Entfernungswerts basierend auf der zum Entfernungswert ermittelten Signalstärke S wird die Position für den Messpunkt so angepasst, dass die nun gewichtet berechnete Position $P_g$ auf dem Objekt 25 liegt. Somit wird durch dieses Gewichten ein sehr präzises Ableiten der Position für den zu vermessenden Punkt auf dem Objekt 25 gewährleistet, wobei nur Positionen auf dem Objekt 25 für die Mehrzahl von Messpunkten berücksichtigt werden. Ein fehlerhaftes Berücksichtigen von Entfernungswerten, die theoretisch zu einem Punkt innerhalb des Objekts 25 bestimmt würden, wird vermieden.

Ferner wird durch das Gewichten der Messungen der effektive Messbereich 32' derart angepasst bzw. verkleinert, dass nur Positionen auf der Oberfläche des Objekts 25 ermittelt werden und dadurch ein effektiver Datenbereich 32" festgelegt wird. Beispielsweise werden hierbei nur diejenigen Messpunkte innerhalb des effektiven Messbereichs 32' zur Ableitung der Position des Einzelpunktes herangezogen, deren Messpunktfläche zu mehr als 50% auf der Objektoberfläche liegen.

Bei der Gewichtung der Einzelpositionen $P_i$ mit der jeweiligen Signalstärke $S_i$ werden die Datenpunkte abseits der Kante 26 stark untergewichtet. Zudem kann eine Objekthöhe durch das Abtasten ("Mikroscan") in Kantennähe sehr präzise bestimmt werden.

Alternativ oder zusätzlich zu der mit den Figuren 3a-c gezeigten signalabhängigen Gewichtung ist erfindungsgemäss auch eine räumliche Gewichtung anwendbar. Diese kann z.B. basierend auf einer Gaußform mit einem Sigma-Wert im Verhältnis zum Durchmesser eines optischen Messspots vorgenommen werden, wodurch eine höhere laterale Auflösung erzielt werden kann. Dadurch kann ausserdem die effektive Abtastfläche für den "Mikroscan" kleiner als bei einer linearen Mittelwertbildung werden.

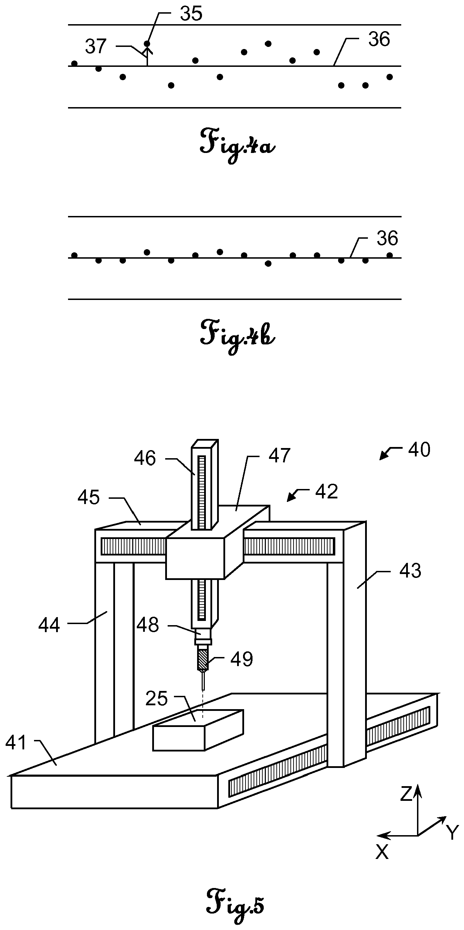

Die Figuren 4a und 4b zeigen jeweils eine Verteilung von Distanzmesswerten mit jeweils nur einer direkten Einzelpunktmessung zu jedem Punkt (vgl. Figur 4a) und einer erfindungsgemässen abtastenden Vermessung eines jeden Einzelpunkts (vgl. Figur 4b).

Die Distanzmesswerte (symbolisiert durch Punkte 35) stellen hierbei jeweils eine entfernungsmässige bzw. positionelle Abweichung 37 des jeweiligen Wertes 35 für einen Einzelpunktes von einem Sollwert dar. Der Sollwert wiederum ist durch die Verwendung eines Kalibriernormals für die Messungen vorgegeben und für die gezeigten Messungen durch die Linie 36 repräsentiert.

Im Vergleich der beiden Messreihen sind die Abweichung 37 der Messwerte von den Sollwerten für die direkten Einzelpunktmessungen zu jedem Punkt deutlich grösser als die Abweichungen 37 für die erfindungsgemässe Vermessung jedes Einzelpunktes durch ein Abtasten im Rahmen einer Mehrzahl von Einzelmessungen mit Erzeugen unterschiedlicher Messpunkte. Die Genauigkeit bei einer erfindungsgemässen Vermessung eines Einzelpunkts ist somit deutlich grösser als die Genauigkeit bei einer herkömmlichen direkten (ohne Abtasten einer direkten Punktumgebung) Entfernungsmessung und/oder Positionsbestimmung für den Einzelpunkt.

Figur 5 zeigt eine Ausführungsform für eine Koordinatenmessmaschine 40 gemäss der Erfindung, beispielhaft ausgebildet als eine Portal-Koordinatenmessmaschine 40.

Die Koordinatenmessmaschine 40 weist eine Basis 41 auf, auf der ein Portal 42 derart angeordnet ist, dass es in einer longitudinalen Richtung (Y-Richtung) bewegbar ist. Das Portal 42 weist zwei Portalträger 43,44, eine Brücke 45 und eine Stange bzw. Z-Säule 46 auf, wobei die Portalträger 43,44 miteinander an ihren oberen Enden über die Brücke 45 verbunden sind.

Auf der Brücke 45 ist ein Schlitten 47 angeordnet, der entlang der Brücke 45, d.h. in einer die beiden Portalträger 43,44 verbindenden Raumrichtung (X-Richtung) bewegbar ist. Die Z-Säule 46 ist in einer dritten Raumrichtung (Z-Richtung) bewegbar und wird in einer Aufnahme des Schlittens 47 geführt. Für diese Bewegung in Z-Richtung ist die Z-Säule 46 in Lagern geführt, welche Bestandteile des Schlittens 47 sind. Insbesondre sind die drei Raumrichtungen X, Y und Z senkrecht zueinander ausgerichtet, auch wenn dieses keine Voraussetzung für die vorliegende Erfindung ist.

Die Koordinatenmessmaschine 40 ist vorgesehen zur Bestimmung eines oder einer Vielzahl von Messpunkten auf einem Objekt 25 und weist daher drei lineare Antriebe zur Ermöglichung der Bewegung eines an der Z-Säule 46 an deren der Basis 41 zugewandtem, unterem freiem Ende angeordneten Messkopfs 48 in den drei Raumrichtungen X, Y und Z relativ zur Basis 41 auf.

Jeder der linearen Antriebe weist ein zugeordnetes Messelement zur Positionsbestimmung in der zugeordneten Führungsrichtung, beispielsweise drei Messbalken für Positionsbestimmungen in X-, Y- bzw. Z-Richtung, auf.

Der Messkopf 48 ist versehen mit einer Aufnahme für einen Messsensor 49. Der Messsensor 49 ist hier als optischer Sensor zur Distanzmessung mittels Laserstrahlung ausgebildet. Generell kann der Messkopf 48 ausgebildet sein zur Aufnahme taktiler Sensoren, mit denen ein mechanischer Kontakt zu einer zu vermessenden Objektoberfläche hergestellt wird, oder kontaktlos messender Sensoren, wie beispielsweise kapazitiver, induktiver und optischer (wie dargestellt) Sensoren.

Gemäss einer alternativen erfindungsgemässen Ausführungsform kann der Messkopf 48 als um mindestens eine Achse schwenkbarer Messkopf 48 ausgebildet sein. Auch ist die Integration eines Mikroverstellers z.B. in Form eines Piezo-Antriebs oder Scanner-Spiegels innerhalb des Messsensors 49 denkbar. Hierbei wäre beispielsweise eine leichte evtl. resonante Vibration eines lichtemittierenden Stylus (Messsensors) möglich.

Hinsichtlich der Ausgestaltung der Koordinatenmessmaschine 40 ist die Erfindung nicht beschränkt auf einen Portalaufbau wie in Figur 5 dargestellt. Für die Erfindung geeignet ist vielmehr jede bekannte Art von Koordinatenmessmaschinen, welche eine Objektoberflächenvermessung mit einem optischen Sensor ermöglicht.

Die Koordinatenmessmaschine 40 weist ausserdem eine Steuerungs- und Verarbeitungseinheit (nicht gezeigt), mit einem Prozessor und einer Vielzahl von Datenträgern auf. Mittels der Steuerungs- und Verarbeitungseinheit werden insbesondere die Antriebe der Koordinatenmessmaschine 40 angesteuert und die Messdaten gespeichert und verarbeitet. Bevorzugt ist die Steuerungs- und Verarbeitungseinheit ausgebildet zur Ermöglichung einer vollautomatischen Vermessung von Objektoberflächen.

Für Zwecke direkter Benutzereingriffe oder direkter Benutzersteuerung kann die Steuerungs- und Verarbeitungseinheit auch mit einer Benutzer-Konsole verbunden sein, insbesondere drahtlos z.B. via Funk. Die Steuerungs- und Verarbeitungseinheit ist zudem ausgebildet zur Ausführung eines erfindungsgemässen Messvorgangs mittels der durch den optischen Messsensor 49 emittierbare Messstrahlung. Im Rahmen dieses Messvorgangs werden mindestens zwei unterschiedliche Messpunkte derart erzeugt, dass dabei jeweils eine durch die Messstrahlung definierte Messrichtung so verändert wird, dass ein Flächenschwerpunkt eines jeweiligen Messpunkts, der durch den Strahlungsquerschnitt auf dem Objekt entsteht, innerhalb eines Messpunktbereichs um den zu vermessenden Punkt liegt. Der Messpunktbereich ist dabei definiert durch den bei einer Ausrichtung der Messachse (die durch die Messstrahlung definiert ist) auf den zu vermessenden Punkt durch den Strahlungsquerschnitt auf dem Objekt entstehenden Messpunkt, d.h. der Messpunktbereich entspricht einer optischen Punktgrösse des so erzeugten Messpunkts. Aus den mindestens zwei Einzelmessungen kann dann eine Entfernung zu dem zu vermessenden Punkt abgeleitet werden.

Hierbei kann insbesondere für jede Einzelmessung ein Messsignal erzeugt werden. Diese Signale können während der Einzelmessungen kumuliert werden und aus den kumulierten Signalen dann die Entfernung zum Punkt abgeleitet werden. Alternativ oder zusätzlich kann bereits bei jeder Einzelmessung aus der dabei jeweils empfangenen Messstrahlung ein Entfernungswert bestimmt und die Entfernung zu dem Punkt aus diesen Entfernungswerten bestimmt werden, insbesondere wobei dieses Bestimmen mittels einer Mittelwertbildung über die Einzelmessungen bzw. über die bestimmten einzelnen Entfernungswerte erfolgt.

Gemäss einer weiteren Ausführungsform der Erfindung wird auf Basis des Messvorgangs, z.B. anhand von jeweils für jeden Messpunkt abgeleiteten Punktkoordinaten, eine Flächennormale für den abgetasteten Bereich bestimmt. Im Speziellen kann aus einem Vergleich der Flächennormalen und der Messrichtung ein Steuersignal erzeugt werden, wodurch die Messrichtung derart ausrichtbar bzw. anpassbar ist, dass diese Richtung orthogonal zum dabei berücksichtigten Flächenabschnitt bzw. parallel, insbesondere koaxial, zur Flächennormale orientiert ist. Insbesondere ist ein solches Ausrichten mit einer Koordinatenmessmaschine mit schwenkbarem Messkopf ausführbar.

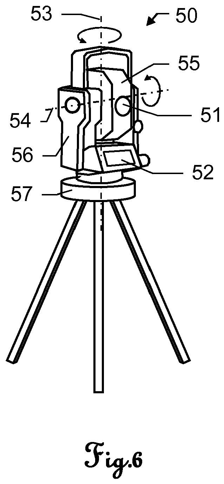

Figur 6 zeigt ein erfindungsgemässes geodätisches Vermessungsgerät 50, hier eine Totalstation 50, mit einer integrierten Kamera, wobei eine Erfassungsrichtung der Kamera weitestgehend parallel zu einer Messrichtung einer ebenfalls im Vermessungsgerät angeordneten Messeinrichtung aufweist. D.h. eine Erfassungsachse der Kamera läuft zumindest parallel, insbesondere koaxial, zu einer durch eine emittierbare Messstrahlung definierte Messachse. Ein Sichtfeld für die Kamera und die Messstrahlung wird durch eine Austrittsoptik definiert.

Des Weiteren ist das Vermessungsgerät 50 mit einer Ausgabeeinheit 52, insbesondere mit einem Display, versehen, auf der von der Kamera erfasste Bilder dargestellt werden können. Zudem verfügt das Gerät zur Ausrichtung auf ein Objekt über zwei senkrecht zueinander stehende Achsen 53,54 (Stehachse 53 und Kippachse 54). Das Vermessungsgerät 50, bzw. die emittierbare Messstrahlung, kann somit mittels Drehung der Anzieleinheit 55 um eine oder beide Achsen 53,54 auf einen zu vermessenden Punkt ausgerichtet werden. Hierzu ist die Anzieleinheit 55 in einer Stütze 56 drehbar um die Kippachse 54 gelagert und die Stütze 56 um die Stehachse 53 auf einer Basis 57 drehbar angeordnet.

Zur Bestimmung einer Entfernung bzw. einer Position eines angezielten Messpunkts ist das Vermessungsgerät 50 zur Ausführung eines erfindungsgemässen Verfahrens ausgebildet, wobei im Rahmen eines dabei erfolgenden Messvorgangs die Messstrahlung zum zu vermessenden Punkt emittiert und die dort reflektierte Strahlung empfangen wird. Zu dem Punkt wird ausserdem eine Mehrzahl von Einzelmessungen durchgeführt. Dabei wird die Messrichtung der Strahlung jeweils so verändert, dass ein bei der jeweiligen Einzelmessung durch die Messstrahlung definierter Messpunkt so angeordnet ist, dass dessen durch den Strahlquerschnitt auf dem Objekt definierter Flächenschwerpunkt innerhalb eines definierten Messpunktbereichs liegt. Der Messbereich ist festgelegt durch den Strahlquerschnitt der Messstrahlung bei einer Ausrichtung der Messachse direkt auf den Messpunkt und den dadurch definierten Bereich auf dem Objekt. Aus den durchgeführten Einzelmessungen wird dann die Entfernung bzw. die Position des Messpunktes abgeleitet.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Entfernungsbestimmung zu Objekten und mit gattungsgemässen Messgeräten, insbesondere Koordinatenmessmaschinen oder Totalstationen, des Stands der Technik kombiniert werden.

**Patentansprüche**

1. Distanzmessverfahren für einen zu vermessenden Punkt (10) auf einem Objekt (25), mit einem

   • Ausführen eines Messvorgangs mit einem

      □ Emittieren von Messstrahlung (30), wobei bei einer Ausrichtung auf den zu vermessenden Punkt (10) einer optischen Messachse der Messstrahlung (30) ein optischer Messpunktbereich (11) durch deren Strahlquerschnitt auf dem Objekt (25), insbesondere durch einen einem maximal Zehnfachen, insbesondere maximal Acht-

fachen, der Standardabweichung $\sigma$ eines Gaussschen Strahlprofils der Messstrahlung (30) entsprechenden Querschnitt, definiert wird, und
□ Empfangen von am Objekt (25) reflektierter Messstrahlung (30) und

   • Bestimmen der Distanz zu dem Punkt (10) auf dem Objekt (25) aus der empfangenen Messstrahlung (30) des Messvorgangs,

   **dadurch gekennzeichnet, dass**
   im Rahmen des Messvorgangs ein zumindest einmaliges Verändern einer Messrichtung als Emissionsrichtung der Messstrahlung (30) mit jeweiligem Emittieren und Empfangen der Messstrahlung (30) erfolgt, wobei das Verändern der Messrichtung jeweils so erfolgt, dass jeweilige durch den Strahlquerschnitt auf dem Objekt (25) definierte Flächenschwerpunkte (20,20') innerhalb des Messpunktbereichs (11) liegen.

2. Verfahren nach Anspruch 1,
   **dadurch gekennzeichnet, dass**
   die im Rahmen des Messvorgangs durch den Strahlquerschnitt auf dem Objekt (25) definierten Flächenschwerpunkte (20,20') in Form einer abzutastenden Messstrecke (21), insbesondere in Kreisform oder als zwei sich kreuzende Linien (22a,b) oder in einem zufälligen Muster angeordnet werden.

3. Verfahren nach Anspruch 1 oder 2,
   **dadurch gekennzeichnet, dass**
   der optische Messpunktbereich (11) definiert ist durch einen Bereich dessen Bereichsgrenze gemäss einem Abstand zur Strahlmitte verläuft, bei welchem die Messstrahlung eine Intensität von einem $(1/e^2)$-fachen des Intensitätsmaximums aufweist.

4. Verfahren nach einem der Ansprüche 1 bis 3,
   **dadurch gekennzeichnet, dass**

   • für jeden in Abhängigkeit der Ausrichtung der Messrichtung und durch den Strahlquerschnitt auf dem Objekt (25) definierten Messpunkt (15,16,17) zusätzlich die jeweilige Messrichtung bestimmt wird und eine Entfernungsinformation erzeugt wird,
   • für jeden Messpunkt (15,16,17) eine Position basierend auf der jeweiligen Messrichtung und der Entfernungsinformation bestimmt wird, insbesondere Koordinaten, und
   • für den zu vermessenden Punkt (10) eine Punktposition mittels Mittelwertbilden basierend auf den Positionen der Messpunkte (15,16,17) abgeleitet wird, insbesondere Punktkoordinaten.

**5.** Verfahren nach einem der Ansprüche 1 bis 4,
**dadurch gekennzeichnet, dass**
im Rahmen des Empfangens von am Objekt (25) reflektierter Messstrahlung (30) eine Signalstärke (S) für die am Objekt (25) reflektierte Messstrahlung (30) bestimmt wird, insbesondere fortlaufend.

**6.** Verfahren nach Anspruch 5,
**dadurch gekennzeichnet, dass**
für jede Ausrichtung der Messstrahlung, insbesondere für jedes Verändern der Messrichtung, die Signalstärke (S) bestimmt wird und dabei anhand der jeweils empfangenen Messstrahlung (30) erzeugte Messsignale bezüglich einer jeweiligen Entfernung basierend auf den bestimmten Signalstärken (S) gewichtet werden, insbesondere korrespondierend zur Signalstärke (S), und die Distanz zu dem zu vermessenden Punkt in Abhängigkeit der Messsignale und des Gewichtens bestimmt wird.

**7.** Verfahren nach Anspruch 5 oder 6,
**dadurch gekennzeichnet, dass**
basierend auf der bestimmten Signalstärke (S) für jede Ausrichtung der Messstrahlung (30) ein positionsabhängiger Objektzustand abgeleitet wird, insbesondere wobei aus den positionsabhängigen Objektzuständen eine topografische Beschaffenheit des Objekts (25) abgeleitet wird.

**8.** Verfahren nach Anspruch 7,
**dadurch gekennzeichnet, dass**
das Gewichten basierend auf dem Objektzustand erfolgt und das Bestimmen der Distanz zu dem zu vermessenden Punkt (10) in Abhängigkeit des objektzustandsabhängigen Gewichtens erfolgt.

**9.** Verfahren nach einem der Ansprüche 1 bis 8,
**dadurch gekennzeichnet, dass**
den jeweiligen Ausrichtungen der Messrichtung zugeordnete Einzelmessungen in Abhängigkeit einer jeweiligen Entfernung zwischen dem Flächenschwerpunkt (20,20') des Messpunktbereichs (11) und dem Flächenschwerpunkt (20,20') der jeweiligen Einzelmessung gewichtet werden und das Bestimmen der Distanz zu dem zu vermessenden Punkt (10) in Abhängigkeit des entfernungsabhängigen Gewichtens für die Einzelmessungen erfolgt.

**10.** Verfahren nach einem der Ansprüche 1 bis 9,
**dadurch gekennzeichnet, dass**

• das mindestens einmalige Verändern der Messrichtung automatisch bei jedem Bestimmen der Distanz zu einem zu vermessenden Punkt (10) oder bei Vorliegen einer definierten Messbedingung durchgeführt wird und/oder
• das Distanzbestimmen interferometrisch erfolgt und/oder

• basierend auf dem Messvorgang eine Flächennormale für den Messpunktbereich (11) bestimmt wird, insbesondere wobei die Messrichtung abhängig von der Flächennormalen eingestellt wird.

**11.** Messgerät (40,50) zur Distanzbestimmung zu einem zu vermessenden Punkt (10) auf einem Objekt (25) mit

• einer Entfernungsmesseinheit mit einer Strahlquelle zur Erzeugung einer Messstrahlung (30) und einem Detektor zum Empfang der an dem Objekt (25) reflektierten Messstrahlung (30),
• Ausrichtemitteln zur Einstellung einer durch die Messstrahlung (30) definierten Messrichtung, wobei bei einer Ausrichtung einer durch die Messstrahlung (30) definierten optischen Messachse auf den zu vermessenden Punkt (10) ein optischer Messpunktbereich (11) durch den Strahlquerschnitt der Messstrahlung (30) auf dem Objekt (25), insbesondere durch einen einem maximal Zehnfachen, insbesondere maximal Achtfachen, der Standardabweichung σ eines Gaussschen Strahlprofils der Messstrahlung (30) entsprechenden Querschnitt, definiert wird,
• Ausrichtungsbestimmungsmitteln zur Bestimmung der durch die Messstrahlung (30) definierten Messrichtung und
• einer Steuerungs- und Verarbeitungseinheit mit einer Distanzbestimmungsfunktionalität, bei deren Ausführung die Distanz zum Punkt (10) aus der empfangenen Messstrahlung (30) bestimmt wird,

**dadurch gekennzeichnet, dass**
bei Ausführung der Distanzbestimmungsfunktionalität gesteuert durch die Steuerungs- und Verarbeitungseinheit erfolgen ein

• Einstellen der Messrichtung zur Ausrichtung der Messstrahlung (30) auf den zu vermessenden Punkt (10),
• Emittieren der Messstrahlung (30) und Empfangen von am Objekt (25) reflektierter Messstrahlung (30),
• zumindest einmaliges Verändern der Messrichtung mit jeweiligem Emittieren und Empfangen der Messstrahlung (30), wobei das Verändern der Messrichtung jeweils so erfolgt, dass jeweilige durch den Strahlquerschnitt auf dem Objekt (25) definierte Flächenschwerpunkte (20,20') innerhalb des Messpunktbereichs (11) liegen.

**12.** Messgerät (40,50) nach Anspruch 11,
**dadurch gekennzeichnet, dass**

das Messgerät (40,50)

• als geodätisches Instrument (50), insbesondere Theodolit Totalstation oder Laserscanner, ausgebildet ist mit

☐ einer eine Stehachse (53) definierenden Basis (57),
☐ einem mit der Basis (57) beweglich verbundenen und relativ zur Basis (57) um die Stehachse (53) drehbaren Aufbau (56), wobei der Aufbau (56) eine Kippachse (54) definiert,
☐ einer mit dem Aufbau (56) beweglich verbundenen, um die Kippachse (54) relativ zum Aufbau (56) schwenkbaren, insbesondere rotierbaren, und zur Aussendung der Messstrahlung vorgesehenen Anzieleinheit (55), insbesondere Fernrohr, wobei die Kippachse (54) im Wesentlichen orthogonal zur Stehachse (53) steht und die Anzieleinheit (55) die Entfernungsmesseinheit aufweist, und
☐ einer die Ausrichtungsbestimmungsmittel repräsentierende Winkelmessfunktionalität zur Erfassung eines durch eine relative Drehposition des Aufbaus (56) zur Basis (57) definierten Drehwinkels und eines durch eine relative Schwenkposition der Anzieleinheit (55) zum Aufbau (56) definierten Schwenkwinkels,

oder
• als Koordinatenmessmaschine (40) ausgebildet ist mit

☐ einer Maschinenbasis (41),
☐ einem Messkopf (48) mit einem, insbesondere abnehmbaren, optischen Messsensor (49), wobei der Messsensor (49) die Entfernungsmesseinheit aufweist, insbesondere wobei der Messkopf (48) als schwenkbarer Messkopf (48)ausgebildet ist und zumindest teilweise die Ausrichtemittel repräsentiert,
☐ einer Rahmenstruktur (42) mit Strukturkomponenten (43-47) zur Verbindung des Messkopfs (48) mit der Maschinenbasis (41),
☐ zumindest einer Antriebseinheit zur Bereitstellung einer Beweglichkeit einer ersten der Strukturkomponenten (43-47) relativ zu einer zweiten der Strukturkomponenten (43-47) oder relativ zur Maschinenbasis in zumindest einer Richtung, wobei die Antriebseinheit zumindest teilweise die Ausrichtemittel repräsentiert, und
☐ zumindest einer Messeinheit zur Bestimmung einer relativen Position der ersten Strukturkomponente (43-47) zur zweiten Strukturkomponente (43-47) oder zur Maschinenbasis (41), wobei die Messeinheit zumindest teilweise die Ausrichtungsbestimmungsmittel repräsentiert.

13. Messgerät (40,50) nach Anspruch 11 oder 12, **dadurch gekennzeichnet, dass** bei Ausführung der Distanzbestimmungsfunktionalität die Messrichtung relativ zum zu vermessenden Punkt (10) verändert wird durch eine Änderung der Position und/oder Ausrichtung der Ausrichtemittel und/oder des Objekts (25), insbesondere durch

• ein Schwenken, Drehen und/oder Verschieben des Messkopfes (48) und/oder des Objekts (25) und/oder
• ein gesteuertes Verstellen eines vom Messsensor (49) umfassten Mikroverstellers, insbesondere eines Piezo-Stellelements oder Scanner-Spiegels,

insbesondere wobei die Messrichtung relativ zum zu vermessenden Punkt (10) derart verändert wird, dass die Messrichtung parallel, insbesondere koaxial, zu einer Flächennormalen für den Messpunktbereich (11) orientiert ist.

14. Messgerät (40,50) nach einem der Ansprüche 11 bis 13, **dadurch gekennzeichnet, dass** die Steuerungs- und Verarbeitungseinheit derart ausgebildet ist, dass gesteuert durch die Steuerungs- und Verarbeitungseinheit ein Verfahren nach einem der Ansprüche 1 bis 11 ausführbar ist.

15. Computerprogrammprodukt, das auf einem maschinenlesbaren Träger gespeichert ist,

• zur Steuerung des Veränderns der Messrichtung und
• zur Ausführung des Ableitens der Distanz für den Punkt (10) aus der empfangenen Messstrahlung (30)

eines Verfahrens nach einem der Ansprüche 1 bis 10, insbesondere wenn das Computerprogrammprodukt auf einer Steuerungs- und Verarbeitungseinheit eines Messgeräts (40,50) nach einem der Ansprüche 11 bis 14 ausgeführt wird.

**Claims**

1. Distance measuring method for a point (10) to be measured on an object (25), comprising

• performing a measuring process comprising

☐ emission of measurement radiation (30), wherein, when an optical measurement axis of the measurement radiation (30) is aligned with the point (10) to be measured, an optical measurement point region (11) is defined by the beam cross section of said radiation on the object (25), in particular by a cross section corresponding to a maximum of ten times, in particular a maximum of eight times, the standard deviation $\sigma$ of a Gaussian beam profile of the measurement radiation (30), and

☐ reception of measurement radiation (30) reflected at the object (25), and

• determining the distance to the point (10) on the object (25) from the received measurement radiation (30) of the measuring process,

**characterized in that**
in the context of the measuring process, this involves carrying out, at least once, alteration of a measurement direction as emission direction of the measurement radiation (30) with respective emission and reception of the measurement radiation (30), wherein the alteration of the measurement direction is carried out in each case such that respective area centroids (20, 20') defined by the beam cross section on the object (25) lie within the measurement point region (11) .

2. Method according to Claim 1,
**characterized in that**
the area centroids (20, 20') defined by the beam cross section on the object (25) in the context of the measuring process are arranged in the form of a measurement path (21) to be scanned, in particular in circular form or as two intersecting lines (22a, b) or in a random pattern.

3. Method according to Claim 1 or 2,
**characterized in that**
the optical measurement point region (11) is defined by a region whose region boundary runs in accordance with a distance from the beam center at which the measurement radiation has an intensity of $(1/e^2)$ times the intensity maximum.

4. Method according to any one of Claims 1 to 3,
**characterized in that**

• for each measurement point (15, 16, 17) defined depending on the alignment of the measurement direction and by the beam cross section on the object (25), in addition the respective measurement direction is determined and distance information is generated,
• for each measurement point (15, 16, 17), a position is determined on the basis of the respective measurement direction and the distance information, in particular coordinates, and
• for the point (10) to be measured, a point position is derived by means of averaging on the basis of the positions of the measurement points (15, 16, 17), in particular point coordinates.

5. Method according to any one of Claims 1 to 4,
**characterized in that**
in the context of the reception of measurement radiation (30) reflected at the object (25), a signal strength (S) for the measurement radiation (30) reflected at the object (25) is determined, in particular continuously.

6. Method according to Claim 5,
**characterized in that**
for each alignment of the measurement radiation, in particular for each alteration of the measurement direction, the signal strength (S) is determined and measurement signals generated on the basis of the respectively received measurement radiation (30) in this case are weighted with regard to a respective distance on the basis of the signal strengths (S) determined, in particular in the manner corresponding to the signal strength (S), and the distance to the point to be measured is determined in a manner dependent on the measurement signals and the weighting.

7. Method according to Claim 5 or 6,
**characterized in that**
a position-dependent object state is derived on the basis of the signal strength (S) determined for each alignment of the measurement radiation (30), in particular wherein a topographical constitution of the object (25) is derived from the position-dependent object states.

8. Method according to Claim 7,
**characterized in that**
the weighting is carried out on the basis of the object state and the distance to the point (10) to be measured is determined in a manner dependent on the object-state-dependent weighting.

9. Method according to any one of Claims 1 to 8,
**characterized in that**
individual measurements assigned to the respective alignments of the measurement direction are weighted in a manner dependent on a respective distance between the area centroid (20, 20') of the measurement point region (11) and the area centroid (20, 20') of the respective individual measurement, and the distance to the point (10) to be measured is determined in a manner dependent on the distance-dependent weighting for the individual measurements.

10. Method according to any one of Claims 1 to 9, **characterized in that**

   • the alteration of the measurement direction at least once is carried out automatically each time the distance to a point (10) to be measured is determined or when a defined measurement condition is present, and/or
   • the distance determining is carried out interferometrically, and/or
   • a surface normal for the measurement point region (11) is determined on the basis of the measuring process, in particular wherein the measurement direction is set depending on the surface normal.

11. Measuring apparatus (40, 50) for determining the distance to a point (10) to be measured on an object (25), comprising

   • a distance measuring unit having a radiation source for generating a measurement radiation (30) and a detector for receiving the measurement radiation (30) reflected at the object (25),
   • alignment means for setting a measurement direction defined by the measurement radiation (30), wherein, when an optical measurement axis defined by the measurement radiation (30) is aligned with the point (10) to be measured, an optical measurement point region (11) is defined by the beam cross section of the measurement radiation (30) on the object (25), in particular by a cross section corresponding to a maximum of ten times, in particular a maximum of eight times, the standard deviation σ of a Gaussian beam profile of the measurement radiation (30),
   • alignment determining means for determining the measurement direction defined by the measurement radiation (30), and
   • a control and processing unit having a distance determining functionality, upon the performance of which the distance to the point (10) is determined from the received measurement radiation (30),

   **characterized in that**
   upon the performance of the distance determining functionality in a manner controlled by the control and processing unit the following are carried out:

   • setting of the measurement direction for aligning the measurement radiation (30) with the point (10) to be measured,
   • emission of the measurement radiation (30) and reception of measurement radiation (30) reflected at the object (25),
   • alteration at least once of the measurement direction with respective emission and reception of the measurement radiation (30), wherein the alteration of the measurement direction is carried out in each case such that respective area centroids (20, 20') defined by the beam cross section on the object (25) lie within the measurement point region (11).

12. Measuring apparatus (40, 50) according to Claim 11, **characterized in that** the measuring apparatus (40, 50)

   • is configured as a geodetic instrument (50), in particular a theodolite, total station or laser scanner, comprising

      ☐ a base (57) defining a vertical axis (53),
      ☐ an assembly (56) connected to the base (57) in a movable manner and rotatable relative to the base (57) about the vertical axis (53), wherein the assembly (56) defines a tilting axis (54),
      ☐ a targeting unit (55), in particular telescope, which is connected to the assembly (56) in a movable manner, is pivotable, in particular rotatable, relative to the assembly (56) about the tilting axis (54) and is provided for emitting the measurement radiation, wherein the tilting axis (54) is substantially orthogonal to the vertical axis (53) and the targeting unit (55) has the distance measuring unit, and
      ☐ an angle measuring functionality representing the alignment determining means and serving for detecting a rotational angle defined by a relative rotational position of the assembly (56) with respect to the base (57) and a pivoting angle defined by a relative pivoting position of the targeting unit (55) with respect to the assembly (56) ,

   or
   • is configured as a coordinate measuring machine (40) comprising

      ☐ a machine base (41),
      ☐ a measuring head (48) having an, in particular detachable, optical measuring sensor (49), wherein the measuring sensor (49) has the distance measuring unit, in particular wherein the measuring head (48) is configured as a pivotable measuring head (48) and at least partly represents the alignment means,
      ☐ a frame structure (42) having structure components (43-47) for connecting the

29 **EP 2 762 832 B1** 30
measuring head (48) to the machine base (41),

☐ at least one drive unit for providing a mobility of a first of the structure components (43-47) relative to a second of the structure components (43-47) or relative to the machine base in at least one direction, wherein the drive unit at least partly represents the alignment means, and

☐ at least one measuring unit for determining a relative position of the first structure component (43-47) with respect to the second structure component (43-47) or with respect to the machine base (41), wherein the measuring unit at least partly represents the alignment determining means.

13. Measuring apparatus (40, 50) according to Claim 11 or 12,
    **characterized in that**
    when the distance determining functionality is performed, the measurement direction relative to the point (10) to be measured is altered by means of a change in the position and/or alignment of the alignment means and/or the object (25), in particular by

    • pivoting, rotation and/or displacement of the measuring head (48) and/or of the object (25) and/or
    • controlled adjustment of a micro-adjuster that the measuring sensor (49) comprises, in particular of a piezo actuating element or scanner mirror,

    in particular wherein the measurement direction relative to the point (10) to be measured is altered in such a way that the measurement direction is oriented parallel, in particular coaxially, with respect to a surface normal for the measurement point region (11).

14. Measuring apparatus (40, 50) according to any one of Claims 11 to 13,
    **characterized in that**
    the control and processing unit is configured in such a way that a method according to any one of Claims 1 to 11 can be performed in a manner controlled by the control and processing unit.

15. Computer program product, stored on a machine-readable carrier,

    • for controlling the alteration of the measurement direction, and
    • for performing the derivation of the distance for the point (10) from the received measurement radiation (30)
    • of a method according to any one of Claims 1 to 10, in particular if the computer program product is executed on a control and processing unit of a measuring apparatus (40, 50) according to any one of Claims 11 to 14.

**Revendications**

1. Procédé de mesure de distance pour un point à mesurer (10) sur un objet (25), consistant à

   • exécuter une opération de mesure consistant à

   - émettre un rayonnement de mesure (30), une zone de points de mesure optique (11) étant, lors d'une orientation d'un axe optique de mesure du rayonnement de mesure (30) sur le point à mesurer (10), définie par sa section transversale de faisceau sur l'objet (25), en particulier par une section transversale correspondant au maximum à dix fois, en particulier au maximum à huit fois, l'écart-type $\sigma$ d'un profil de faisceau gaussien du rayonnement de mesure (30), et
   - recevoir un rayonnement de mesure (30) réfléchi par l'objet (25) et

   • déterminer la distance au point (10) sur l'objet (25) à partir du rayonnement de mesure (30) reçu de l'opération de mesure,

   **caractérisé en ce que**
   dans le cadre de l'opération de mesure, une modification au moins unique d'une direction de mesure en tant que direction d'émission du rayonnement de mesure (30) avec émission et réception respectives du rayonnement de mesure (30) est effectuée, la modification de la direction de mesure étant chaque fois effectuée de telle sorte que des centres de gravité de surface (20, 20') respectifs définis par la section transversale de faisceau sur l'objet (25) se situent à l'intérieur de la zone de points de mesure (11).

2. Procédé selon la revendication 1,
   **caractérisé en ce que**
   les centres de gravité de surface (20, 20') définis par la section transversale de faisceau sur l'objet (25) dans le cadre de l'opération de mesure sont disposés sous la forme d'un parcours de mesure (21) à balayer, en particulier en forme de cercle ou sous la forme de deux lignes (22a, b) qui se croisent ou selon un motif aléatoire.

3. Procédé selon la revendication 1 ou 2,
   **caractérisé en ce que**
   la zone de points de mesure optique (11) est définie par une zone dont la limite de zone s'étend selon

**16**

une distance au centre du faisceau à laquelle le rayonnement de mesure présente une intensité de $(1/e^2)$ fois le maximum d'intensité.

4. Procédé selon l'une des revendications 1 à 3, **caractérisé en ce que**

> • pour chaque point de mesure (15, 16, 17) défini en fonction de l'orientation de la direction de mesure et par la section transversale de faisceau sur l'objet (25), la direction de mesure respective est déterminée en plus et une information de distance est générée,
> • pour chaque point de mesure (15, 16, 17), une position, en particulier des coordonnées, est/sont déterminée(s) sur la base de la direction de mesure respective et de l'information de distance, et
> • pour le point à mesurer (10), une position de point, en particulier des coordonnées de point, est/sont dérivée(s) par formation de la moyenne sur la base des positions des points de mesure (15, 16, 17).

5. Procédé selon l'une des revendications 1 à 4, **caractérisé en ce que**
dans le cadre de la réception du rayonnement de mesure (30) réfléchi sur l'objet (25), une intensité de signal (S) pour le rayonnement de mesure (30) réfléchi sur l'objet (25) est déterminée, en particulier en continu.

6. Procédé selon la revendication 5, **caractérisé en ce que**
pour chaque orientation du rayonnement de mesure, en particulier pour chaque modification de la direction de mesure, l'intensité de signal (S) est déterminée et des signaux de mesure générés à partir du rayonnement de mesure (30) respectivement reçu sont pondérés par rapport à une distance respective sur la base des intensités de signal (S) déterminées, en particulier de façon correspondante à l'intensité de signal (S), et la distance au point à mesurer est déterminée en fonction des signaux de mesure et de la pondération.

7. Procédé selon la revendication 5 ou 6, **caractérisé en ce que**
pour chaque orientation du rayonnement de mesure (30), un état de l'objet dépendant de la position est dérivé sur la base de l'intensité de signal (S) déterminée, en particulier une caractéristique topographique de l'objet (25) est dérivée des états de l'objet dépendants de la position.

8. Procédé selon la revendication 7, **caractérisé en ce que**
la pondération est effectuée sur la base de l'état de l'objet et la détermination de la distance au point à mesurer (10) est effectuée en fonction de la pondération dépendante de l'état de l'objet.

9. Procédé selon l'une des revendications 1 à 8, **caractérisé en ce que**
des mesures individuelles associées aux orientations respectives de la direction de mesure sont pondérées en fonction d'une distance respective entre le centre de gravité de surface (20, 20') de la zone de points de mesure (11) et le centre de gravité de surface (20, 20') de la mesure individuelle respective et la détermination de la distance au point à mesurer (10) est effectuée en fonction de la pondération dépendante de la distance pour les mesures individuelles.

10. Procédé selon l'une des revendications 1 à 9, **caractérisé en ce que**

> • ladite modification au moins unique de la direction de mesure est effectuée automatiquement à chaque détermination de la distance à un point à mesurer (10) ou en présence d'une condition de mesure définie et/ou
> • la détermination de distance est effectuée par interférométrie et/ou
> • sur la base de l'opération de mesure, une normale à la surface est déterminée pour la zone de points de mesure (11), en particulier la direction de mesure étant réglée en fonction de la normale à la surface.

11. Appareil de mesure (40, 50) pour déterminer la distance à un point à mesurer (10) sur un objet (25), comprenant

> • une unité de mesure de distance avec une source de rayonnement pour générer un rayonnement de mesure (30) et un détecteur pour recevoir le rayonnement de mesure (30) réfléchi sur l'objet (25),
> • des moyens d'orientation pour régler une direction de mesure définie par le rayonnement de mesure (30), une zone de points de mesure optique (11) étant, lors d'une orientation d'un axe optique de mesure du rayonnement de mesure (30) sur le point à mesurer (10), définie par la section transversale de faisceau du rayonnement de mesure (30) sur l'objet (25), en particulier par une section transversale correspondant au maximum à dix fois, en particulier au maximum à huit fois, l'écart-type $\sigma$ d'un profil de faisceau gaussien du rayonnement de mesure (30),
> » des moyens de détermination d'orientation pour déterminer la direction de mesure définie par le rayonnement de mesure (30) et
> • une unité de commande et de traitement avec une fonctionnalité de détermination de distance lors de l'exécution de laquelle la distance au point (10) est déterminée à partir du rayonnement de mesure (30) reçu,

**caractérisé en ce que**
lors de l'exécution de la fonctionnalité de détermination de distance, il se produit, de façon commandée par l'unité de commande et de traitement,

• un réglage de la direction de mesure pour orienter le rayonnement de mesure (30) sur le point à mesurer (10),
• une émission du rayonnement de mesure (30) et une réception du rayonnement de mesure (30) réfléchi sur l'objet (25),
• une modification au moins unique de la direction de mesure avec émission et réception respectives du rayonnement de mesure (30), la modification de la direction de mesure étant chaque fois effectuée de telle sorte que des centres de gravité de surface (20, 20') respectifs définis par la section transversale de faisceau sur l'objet (25) se situent à l'intérieur de la zone de points de mesure (11).

12. Appareil de mesure (40, 50) selon la revendication 11,
**caractérisé en ce que**
l'appareil de mesure (40, 50)

• est réalisé sous la forme d'un instrument géodésique (50), en particulier d'un théodolite, d'une station totale ou d'un scanner laser comprenant

- une base (57) définissant un axe vertical (53),
- une structure (56) reliée de manière mobile à la base (57) et pouvant tourner par rapport à la base (57) autour de l'axe vertical (53), la structure (56) définissant un axe de basculement (54),
- une unité de visée (55), en particulier une lunette, reliée de manière mobile à la structure (56), pouvant pivoter, en particulier tourner par rapport à la structure (56) autour de l'axe de basculement (54) et prévue pour émettre le rayonnement de mesure, l'axe de basculement (54) étant sensiblement orthogonal à l'axe vertical (53) et l'unité de visée (55) présentant l'unité de mesure de distance, et
- une fonctionnalité de mesure d'angle représentant le moyen de détermination d'orientation pour détecter un angle de rotation défini par une position de rotation relative de la structure (56) par rapport à la base (57) et un angle de pivotement défini par une position de pivotement relative de l'unité de visée (55) par rapport à la structure (56),

ou

• est réalisé sous la forme d'une machine de mesure de coordonnées (40) comprenant

- une base de machine (41),
- une tête de mesure (48) avec un capteur de mesure optique (49), en particulier amovible, le capteur de mesure (49) présentant l'unité de mesure de distance, en particulier la tête de mesure (48) étant réalisée sous la forme d'une tête de mesure pivotante (48) et représentant au moins partiellement les moyens d'orientation,
- une structure de cadre (42) avec des composants de structure (43-47) pour relier la tête de mesure (48) à la base de machine (41),
- au moins une unité d'entraînement pour fournir une mobilité d'un premier des composants de structure (43-47) par rapport à un deuxième des composants de structure (43-47) ou par rapport à la base de machine dans au moins une direction, l'unité d'entraînement représentant au moins partiellement les moyens d'orientation, et
- au moins une unité de mesure pour déterminer une position relative du premier composant de structure (43-47) par rapport au deuxième composant de structure (43-47) ou par rapport à la base de machine (41), l'unité de mesure représentant au moins partiellement les moyens de détermination d'orientation.

13. Appareil de mesure (40, 50) selon la revendication 11 ou 12,
**caractérisé en ce que**
lors de l'exécution de la fonctionnalité de détermination de distance, la direction de mesure par rapport au point à mesurer (10) est modifiée par une modification de la position et/ou de l'orientation des moyens d'orientation et/ou de l'objet (25), en particulier par

• un pivotement, une rotation et/ou une translation de la tête de mesure (48) et/ou de l'objet (25) et/ou
• un positionnement commandé d'un micro-positionneur compris par le capteur de mesure (49), en particulier d'un élément de réglage piézoélectrique ou d'un miroir de scanner,

en particulier la direction de mesure par rapport au point à mesurer (10) étant modifiée de telle sorte que la direction de mesure soit orientée parallèlement, en particulier coaxialement, à une normale à la surface pour la zone de points de mesure (11).

14. Appareil de mesure (40, 50) selon l'une des revendications 11 à 13,
**caractérisé en ce que**
l'unité de commande et de traitement est réalisée de telle sorte qu'un procédé selon l'une des revendications 1 à 11 puisse être exécuté de façon commandée par l'unité de commande et de traitement.

15. Produit programme d'ordinateur qui est enregistré sur un support lisible par machine

  • pour commander la modification de la direction de mesure et
  • pour exécuter la dérivation de la distance pour le point (10) à partir du rayonnement de mesure (30) reçu

d'un procédé selon l'une des revendications 1 à 10, en particulier lorsque le produit programme d'ordinateur est exécuté sur une unité de commande et de traitement d'un appareil de mesure (40, 50) selon l'une des revendications 11 à 14.

Fig.1a

Fig.1b

Fig.2a

Fig.2b

Fig.3a

Fig.3b

Fig.3c

*Fig.4a*

*Fig.4b*

*Fig.5*

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1686350 A
- DE 4325337
- DE 4325347
- US 5402582 A
- EP 1474650 A

- EP 2037214 A
- DE 102005061464
- FR 2738343
- DE 19836812 A1
- EP 2037214 A1


**In der Beschreibung aufgeführte Nicht-Patentliteratur**

- **B. WIESNER et al.** Improved white-light interferometry on rough surfaces by statistically independent speckle patterns. *Appl. Opt.,* 2012, vol. 51, 751-757
- **PAVEL PAVLIČEK ; JAN SOUBUSTA.** Theoretical Measurement Uncertainty of White-Light Interferometry on Rough Surfaces. *Appl. Opt.,* 2003, vol. 42, 1809-1813

- **D. FLEISCHLE ; W. LYDA ; F. MAUCH ; W. OSTEN.** Untersuchung zum Zusammenhang von spektraler Abtastung und erreichbarer Messunsicherheit bei der chromatisch-konfokalen Mikroskopie an rauen Objekten. *DGAO Proceedings,* 2010
- **D.C. ADLER ; T.H. KO ; J.G. FUJIMOTO.** Speckle reduction in optical coherence tomography images by use of a spatially adaptive wavelet filter. *Opt. Lett.,* 2004, vol. 29, 2878-2880
- **A. HARASAKI ; J.C. WYANT.** Fringe modulation skewing effect in white-light vertical scanning interferometry. *Appl. Opt.,* 2000, vol. 39, 2101